# EUROPEAN PATENT SPECIFICATION

(11) **EP 4 166 767 B1**
(45) Date of publication and mention of the grant of the patent: **24.04.2024**
(21) Application number: 21203220.5
(22) Date of filing: 18.10.2021
(51) Int. Cl.: F02B 29/04, F28D 9/00, F28F 9/00, F28F 9/02

(54) **A HEAT EXCHANGER**
WÄRMETAUSCHER
ÉCHANGEUR DE CHALEUR

(43) Date of publication of application: 19.04.2023
(73) Proprietor: Valeo Autosystemy SP. Z.O.O., 32-050 Skawina (PL)
(72) Inventor: SZOSTEK, Dawid, 32 050 Skawina (PL); BUREK, Dariusz, 32 050 Skawina (PL); WIDZYK, Lukasz, 32 050 Skawina (PL); BELZOWSKI, Michal, 32 050 Skawina (PL)
(74) Representative: Valeo Systèmes Thermiques

(56) References cited:
- CN-B- 102 762 947
- JP-A- 2014 013 140
- US-B2- 9 797 663
- US-B2- 10 240 872

## Description

The present invention relates to a heat exchanger. In particular, the invention relates to a charge air-cooler having a movable manifold to increase thermal shock resistance of the heat exchanger. A charge air-cooler with the features of the preamble of claim 1 is known from US 10 240 872.

The heat exchangers are provided in a vehicle for various operations. Particularly, charge air coolers are provided in air inlet circuit of an engine in the downstream of turbocharges or superchargers. Generally, turbocharges or superchargers provided in the air inlet circuit of the engine to draw more power from the engine with smaller displacement of the vehicle, thereby improving fuel efficiency and reducing CO2 emission. In the forced induction engines, power output becomes a function of how much air is delivered to the cylinders. Most commonly used methods is to introduce the compressors to recapture energy from gas exhaust manifold through an expansion turbine, which pressurizes air delivered to the engine, or relay part of engine's power to motorize the supercharger, usually by a set of pulleys.

Further, pressurizing the air leads to substantial increase of its temperature. Consequently, the density of the air decreases with the temperature, because hot air is less dense than the cold air. The automotive industry, like many other industrial fields, uses heat exchangers to ensure optimal temperature operating conditions for the engine. Therefore, the charge air cooler is provided in the upstream to the engine and downstream to the turbo/super-charger. The charge air cooler may dissipate heat from the charged air flowing from the turbocharger. The charge air cooler is equipped with a set of tubes forming a heat exchange bundle between a first fluid and a second heat transfer fluid, and the heat exchange bundle being housed in a casing.

The tubes in the charge air cooler can be made of aluminum as it offers significant weight savings, and aluminum alloys also have good thermal and corrosion resistance. Due to the complexity of the charge air cooler and the small dimensions allowed, the components of the charge air coolers are assembled by brazing. For example, the heat exchanger includes a pair of end plates encapsulating the heat exchange tubes and a header plate perpendicularly connected to the end plates. Here, the end plates are brazed with the header plates along its length. Further, a tank is crimped or connected by any other means to the header plate of the heat exchanger.

It is known that the heat exchange tubes conveys the heat exchange fluid having higher temperature, thereby the tubes may expand and contract based on the temperature changes of the fluid. As the header plate with the tubes is brazed to the end plates, there is a possibility of cracking at the connection between the header plate and the end plates. Also, there is some stress developed on the tank and the header of the heat exchanger due to stable connection between the header plate and end plates. As a result, service life of the heat exchanger is reduced.

Accordingly, there remains a need for a heat exchanger having a movable manifold that moves independently with respect to end plates of the heat exchanger. Further, there remains another need for simple design of a heat exchanger to improve thermal shock resistance of the heat exchanger without increasing dimension and weight of the heat exchanger. Yet, another need for a design of end plates of the heat exchanger that is partially isolated with the manifold of the heat exchanger.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In view of forgoing, the present invention relates a heat exchanger for heat exchange between a first fluid and a second fluid. The heat exchanger includes a stack of spaced apart heat exchange elements, a header and a housing. The heat exchange elements form a first fluid circuit for the first fluid and the header is adapted to receive first ends of the heat exchange elements. The housing is adapted to at least partially encapsulate the heat exchange elements to form a second fluid circuit for the second fluid. Further, the housing includes at least one first plate and a second plate disposed parallel with respect to the first plate. Further, at least one of the plates includes a first section that is in contact with the header and at least one second section that is free from the contact with the header, so that the header and the second section are able to move independently with respect to each other during operational mode of the heat exchanger.

Further, the heat exchanger includes a third plate fixed perpendicularly with respect to the first plate and the second plate at a first side of the first plate and the second plate. Also, the header is fixed perpendicularly with respect to the first plate and the second plate at a second side of the first plate and the second plate.

The heat exchanger further includes at least one tank fluidically connected to the header and configured to provide fluidal communication for the second fluid circuit.

In one embodiment, the second section is a cavity formed by any one of stamping, bumping and punching on the first plate and the second plate.

Further, the first plate includes at least two second sections formed on an inner face of the first plate, in which the inner side of the first plate is facing the header.

Further, the second plate includes at least two second sections formed on an inner face of the second plate, in which the inner side of the second plate is facing the header.

In one example, the cavity is formed at the corner areas, corresponding to the header, of the first plate and the second plate.

Further, the depth "D" of the cavity formed on at least one of the first plate and the second plate is 0.7 mm.

In another embodiment, the second section formed on any one of the first plate and the second plate is a recessed portion.

Further, the recessed portion is formed on an inner side of both the first plate and the second plate in which the inner side of the first plate and the second plate is facing the header.

In one example, corner areas of the first portion of the first plate and the second plate are brazed to the header.

In another example, each of the first plate and the second plate includes anti-brazing portions having an anti-brazing material.

Further, the heat exchange elements are heat exchange tubes formed by stamping two similar plates.

In another example, the heat exchanger includes fins and turbulators. The fins are interlaced between the heat exchange elements for increasing turbulence of the first fluid inside the housing and the turbulators are formed within the heat exchange elements for increasing turbulence of the second fluid within the heat exchange elements.

Further, each of the heat exchange elements includes at least one protruded portion formed on second ends of the heat exchange elements, in which the protruded portion is in contact with the third plate of the housing.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
Figs. 1 and 2 illustrate perspective view of a heat exchanger, in accordance with the present invention;
Fig. 3 illustrates a perspective view of a housing of the heat exchanger with a header of Fig. 1;
Fig. 4 illustrate a schematic view of a standalone tube of the heat exchanger of Fig. 1;
Fig. 5 illustrates a top view of the top side of a first plate of the housing of Fig. 3;
Fig. 6 is a schematic view of the bottom side of the first plate of the housing of Fig. 3;
Fig. 7 is a schematic view of a second plate of the housing of Fig. 3;
Fig. 8 is a perspective view of the heat exchanger showing the second sections formed on one edge of the first plate; and
Figs. 9 and 10 are cross-sectional views of the connection between the first plate and the header of the heat exchanger of Fig. 1.

It must be noted that the figures disclose the invention in a detailed enough way to be implemented, said figures helping to better define the invention if needs be. The invention should however not be limited to the embodiment disclosed in the description.

The present invention envisages a heat exchanger comprising non-continuous connection between end plates and a manifold of the heat exchanger. In conventional heat exchangers, a header plate of a heat exchanger is brazed to the end plates of the heat exchanger along the length of the header plates. As the header plate experiences differential temperature of the fluid, the corner of the header plate may expand or contract with respect to the end plates. As the header plate is brazed to the end plates along its length, the connection between the header plate and the end plates may be damaged, which affect service life of the heat exchanger or even causes malfunction of the whole vehicle. To avoid such problems, the end plates and the header plate are designed in such a way the header plate and at least a portion of the end plates are able to move independently with respect to each other during operational mode of the heat exchanger. As a result, formation of cracks at the connection between the header plate and the end plates can be avoided. Design and geometry of the heat exchanger are explained with respect to the forthcoming figures.

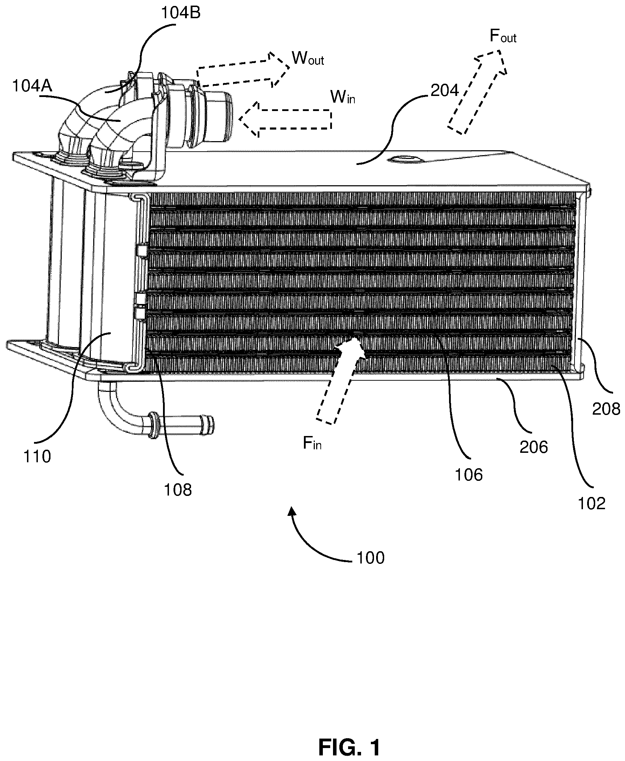

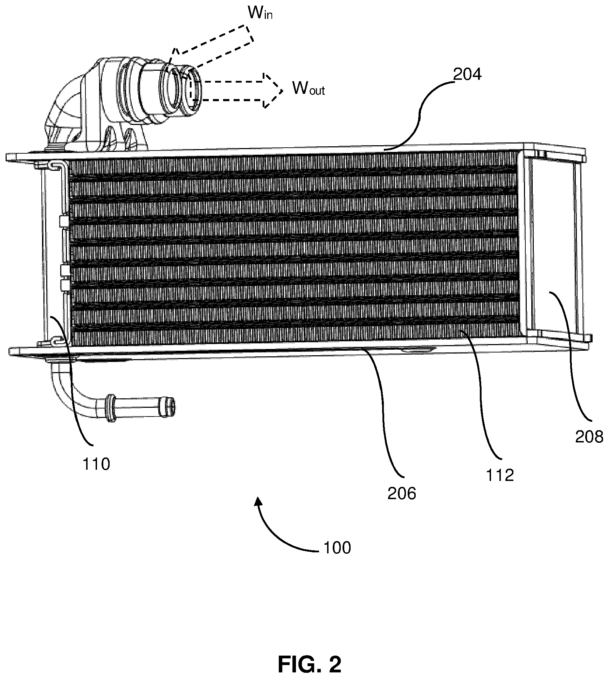

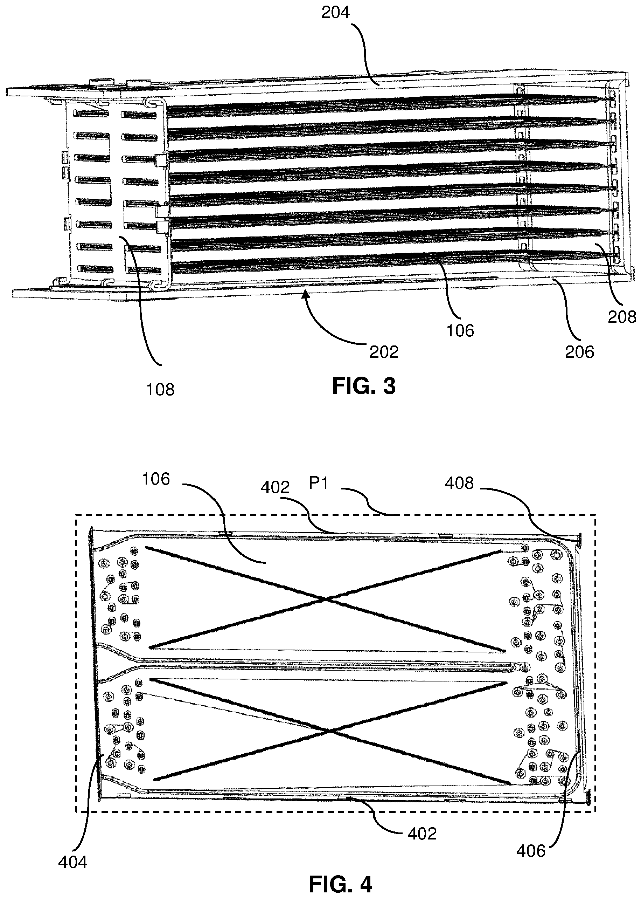

Figs. 1, 2 and 3 illustrate schematic views of a heat exchanger 100, in accordance with an embodiment of the present invention. In this example, Figs 1 and 2 are perspective views of the heat exchanger 100 and Fig. 3 is another perspective view of the heat exchanger 100 without a tank and interlaced fins. The heat exchanger 100 is adapted for heat exchange between a first fluid and a second fluid. The heat exchanger 100 may include three plates forming a housing 202. In other words, the heat exchanger 100 comprises a housing 202 having at least three plates. The three plates being a first plate 204, a second plate 206 and at least one third plate 208. Further, the first plate 204 and the second plate 206 may be aligned parallelly and spaced from each other. The third plate 208 may be aligned perpendicularly with respect to the first and the second plates 204, 206, so that the opposite edges of the third plate 208 are in contact with the first plate 204, as well as the second plate 206.

The heat exchanger 100 further may comprise a header 108. The header 108 may be located parallelly with respect to the third plate 208 and perpendicularly with respect to the first and the second plates 204, 206, so that, similarly to the third plate 208, the opposite edges of the header 108 are in contact with the first plate 204, as well as the second plate 206. As shown in Fig. 3, the third plate 208 may be fixed perpendicularly with respect to the first and second plates 204, 206 at a first side of the first and second plates 204, 206. Meanwhile, the header 108 may be fixed perpendicular with respect to the first and second plates 204, 206 at a second side of the first and second plates 204, 206 as shown in Fig. 3.

The plates 204, 206, 208 and the header 108 may be joined together, e.g. by brazing, so that the plates 204, 206, 208 and the header 108 form an essentially rectangular fluid tight housing 202 which delimits a first fluid circuit 102 for the first fluid, e.g. charge air. The housing 202 may further receive intake and outtake (not shown) for the first fluid on its open ends. The exemplary first fluid flow direction from intake to outtake is depicted in Fig.1 by Fᵢₙ and Fₒᵤₜ, respectively.

Further, a second fluid circuit for the second fluid may be formed, inter alia, by the header 108, which may include an inlet spigot 104A and an outlet spigot 104B for delivering or collecting the second fluid, e.g. coolant. The exemplary second fluid flow direction from the inlet to the outlet is depicted in Fig. 1 by Wᵢₙ and Wₒᵤₜ, respectively. The second fluid circuit further comprises at least one heat exchange element 106 located within the housing 202. Here, the heat exchange element 106 can be tube. In this example, the term "within" means that the tube 106 does not protrude beyond the space delimited by the housing 202. The tube 106 is aligned substantially in parallel with respect to the first plate 204 and the second plate 206, and in perpendicular to the header 108 and the third plate 208.

The heat exchanger 100 further includes at least one tank 110 connected to the header 108 to provide fluidal communication for the second fluid circuit. Preferably, the tank 110 is crimped to the header 108 to provide the second fluid to the tube 106. Further, the inlet spigot 104A and the outlet spigot 104B are in fluidic communication with the tank 110 to deliver and collect the second fluid to/from the tank 110. In one example, the tank 110 and the header 108 are collectively referred to as "manifold".

Further, the tube 106 may extend from the header 108 to the third plate 208, whereas it is fluidly connected only with the header 108. In other words, the header 108 may receive a first end of the tube 106, whereas a second end of the tube 106 is in contact with the third plate 208. The tube 106 is formed so as to enable at least one U-turn at the path of the second fluid flowing there through. Generally, the header 108 may configured to deliver and/or collect the second fluid to the tube 106 through two parallel channels formed therein. Preferably, the channels in the header 108 are formed as a unitary element with e.g. partition, however other means of providing channels for the second fluid are also envisaged.

Usually, the heat exchanger 100 may comprise a plurality of tubes 106 to improve the efficiency thereof. The tubes 106 are stacked one on the other in a parallel manner, perpendicularly to the header 108, so that the second fluid is distributed as homogenously as possible. The second fluid may flow through the inlet Wᵢₙ and it is directed to respective channel of the header 108 that feeds the tubes 106. Next, the second fluid flows through the U-shaped tube 106 back to the header 108 and then it is collected by the second fluid outlet Wₒᵤₜ.

In order to improve the heat exchange efficiency, the stack of spaced apart tubes 102 may be interlaced with so-called turbulators and/or fins 102. The number of turbulators or fins 102 interlaced between the tubes 106 corresponds to the free spaces in the vicinity of the tubes 106 or provided within the tubes 106. In other words, turbulators or fins 102 fill the spaces not occupied by other sub-components within the housing 202 in order to maximize the heat exchange efficiency and to reduce bypassing of the tubes 106 by the first fluid and the second fluid. Particularly, the fins 102 are interlaced between the tubes 106 for increasing turbulence of the first fluid inside the housing 202, and the turbulators (not shown in figure) are formed within the tubes 106 for increasing turbulence of the second fluid within the tubes 106. In this present example, the heat exchanger 100 is a charge air cooler. In such case, the first fluid being a charged air and the second fluid being a heat transfer fluid, i.e., coolant or water or water-glycol mixture.

Fig. 4 illustrates a schematic view of a standalone tube 106 of the heat exchanger of Fig. 1. In one embodiment, each tube 106 may have essentially rectangular shape, so that a general plane (P1) may be defined. In this example, the general plane (P1) of the tube 106 may defined along the contact area of two half-plates. In other words, the general plane (P1) of the tube 106 runs parallelly and in-between the half-plates of particular tube 106. In other words, the general plane (P1) may cross the median section the tube 106, so that the conduit for the first fluid in both sections thereof is split into two even halves. Further, the tube 106 may be formed by stamping two similar plates.

As shown in Fig. 4, the tube 106 may further include a coupling edge 402 for coupling two half-plates. As discussed above, the coupling edge 402 may delimit the tube 106 formed by the two plates assembled with each other with their respective opposite faces and may delimit a conduit for the circulation of the second fluid, i.e., heat-transfer fluid within the tube 106. In one example, the first end 404 of the tube 106 may be received into the header 108 and the second end 406 of the tube 106 may be in contact to the third plate 208. Particularly, the second end 406 of the tube 106 may include at least one protruded portion 408 adapted to be in contact to the third plate 208. In another example, the protruded portion 408 may be provided at the coupling edge 402 for assembling the coupling edge 402 with at least one plate of the heat exchanger 100, in particular the third plate 208 of the housing 108.

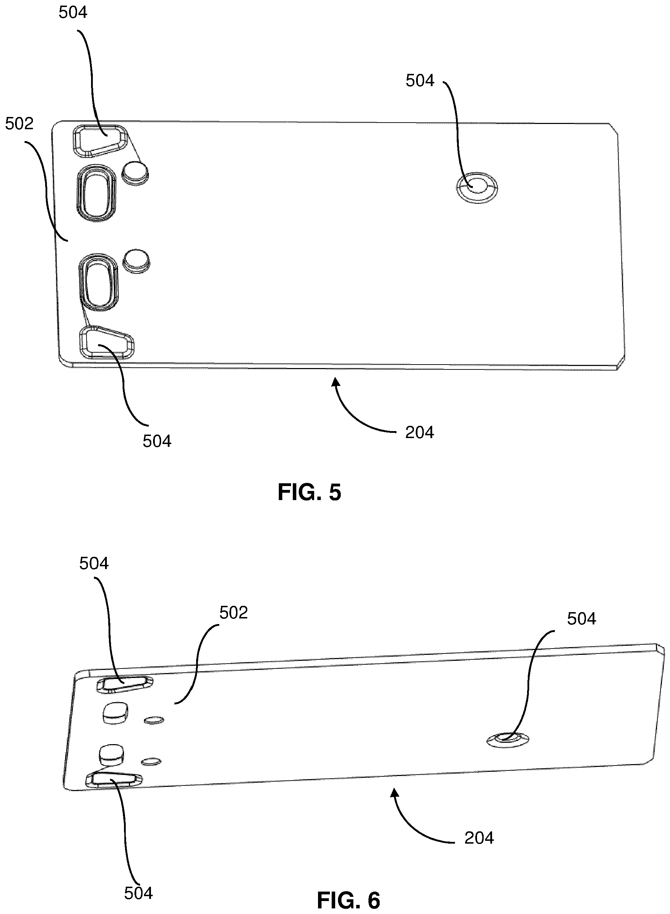

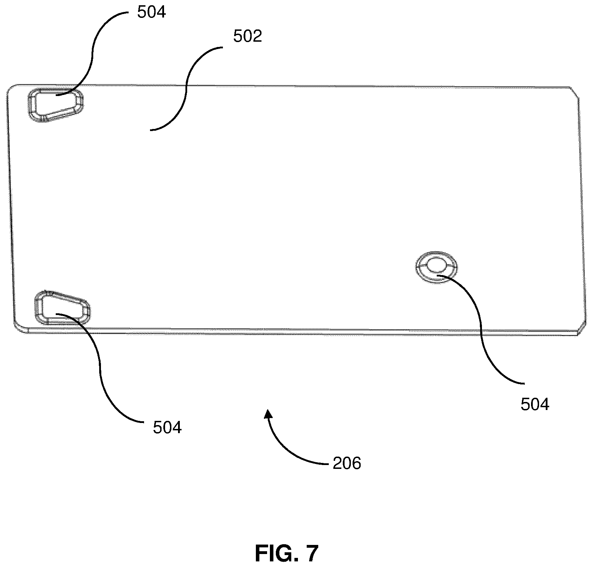

Figs. 5-7 illustrate schematic views of the first plate 204 and the second plate 206 of the housing 202 of Fig. 1. In this example, Fig. 5 is a top view of the top side of the first plate 204 and Fig. 6 is a schematic view of the bottom side of the first plate 204. Fig. 7 is a schematic view of the second plate 206. Further, at least one of the first and second plates 204, 206 comprises a first section 502 and at least one second section 504. As shown in Figs. 5-7, the first section 502 and the second section 504 formed on both the first and second plates 204, 206. Although the first section 502 and the second section 504 are formed on the both plates 204, 206, it is possible to define the second section 504 on any one of the first plate 204 or the second plate 206. Further, each of the first plate 204 and the second plate 206 may include anti-brazing portions having an anti-brazing material. In such portions of the first plate 204 and the second plate 206 may not be brazed to the header 108.

In one example, the second sections 504 may be formed on both ends of the first plate 204 and the second plate 206. In another example, the second sections 504 may be formed on one end of the first plate 204 and the second plate 206. In one embodiment, any one of the first plate 204 and the second plate 206 may include at least two second sections 504 formed on an inner face of the first plate 204 and the second plate 206. Here, the inner face of the first and second plates 204, 206 is a side facing the header 108. In one example, the two second sections 504 are defined on same end of the first plate 204 and the second plate 206. In another example, the two second sections 504 are defined on the opposite ends of the first and second plates 204, 206. Preferably, the second sections 504 are formed on the first and second plates 204, 206, corresponding to the header 108 and the third plate 208. In one embodiment, the second sections 504 are cavity formed by any one of stamping, bumping and punching on the first plate 204 and the second plate 206. In another embodiment, the second sections 504 are recessed portion formed on any one of the first plate 204 and the second plate 206.

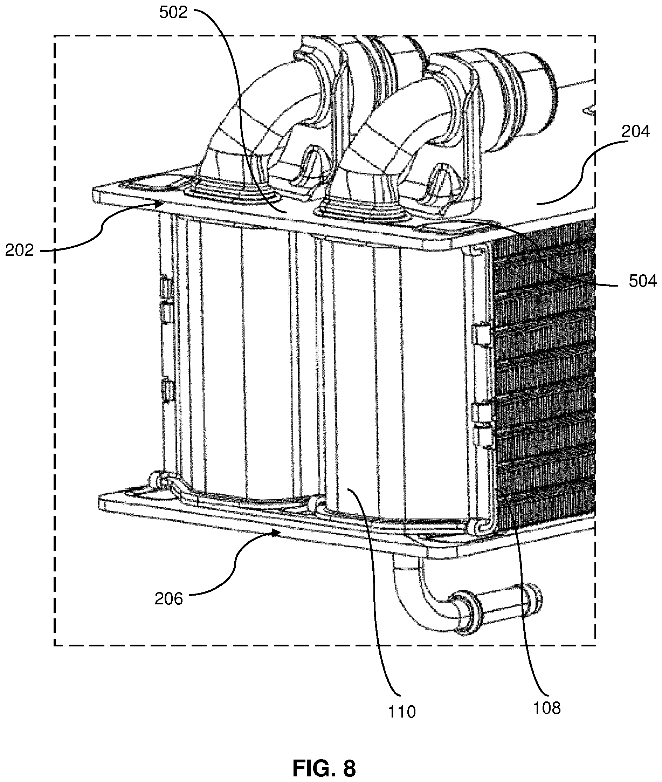

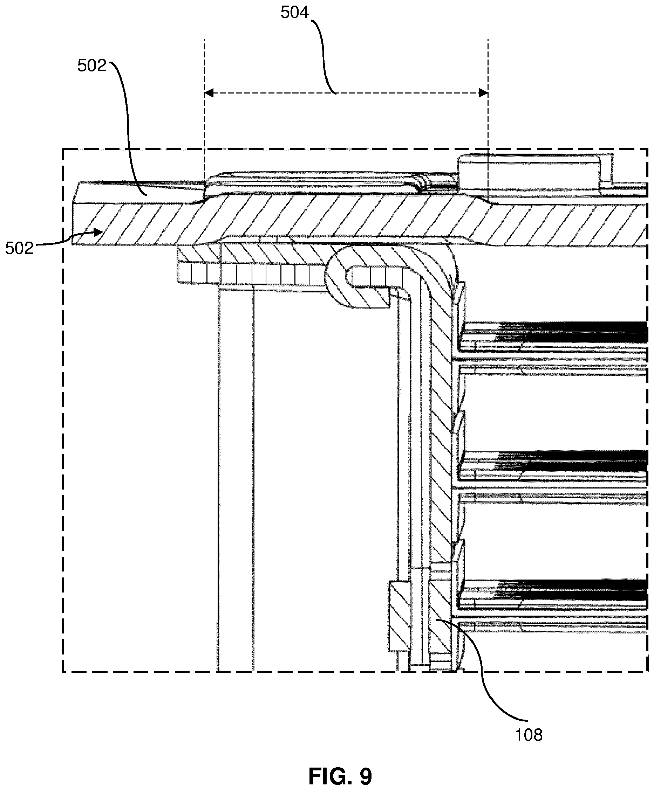

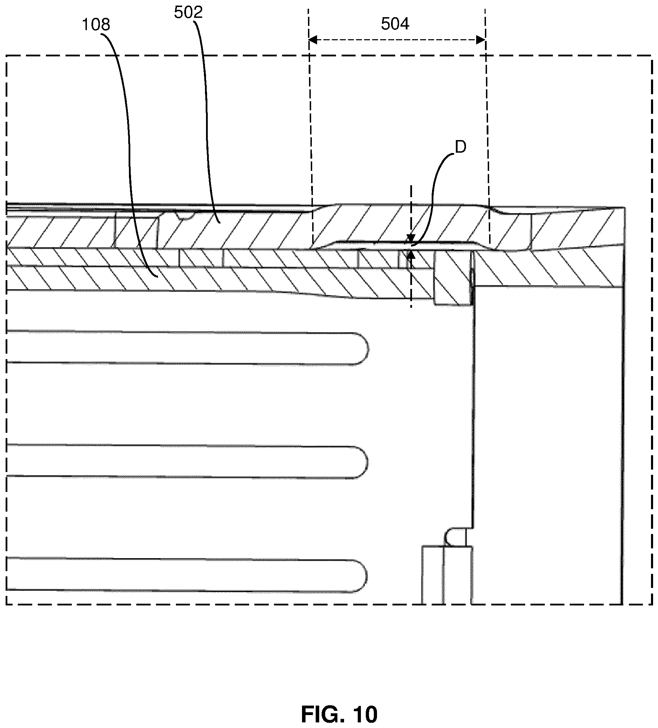

Figs. 8-10 illustrates different views of the heat exchanger 100 of Fig. 1. Particularly, Fig. 8 is a perspective view of the heat exchanger 100 showing the second sections 504 formed on one edge of the first plate 204 and Figs. 9 and 10 are cross-sectional views of the connection between the first plate 204 and the header 108 of the heat exchanger 100. As discussed above, any first plate 204 and second plate 206 may comprise the first section 502 and the second sections 504. In this example, the second sections 504 may be formed at the corner areas of the first plate 204, corresponding to the header 108. Further, the first section 503 is in contact with the header 108 and the second sections 504 are free from the contact with the header 108. It is evident from Fig. 8 that the second section 504 is free from the contact with the header 108, so that the header 108 and the second section 504 are able to move independently with respect to each other during operational mode of the heat exchanger 100. When the heat exchanger 100 is in the operational mode, the header 108 or the first plate 204 at the second section 504 may move relatively due to differential temperature of the second fluid flowing there through.

The first section 502 of the first plate 204 may be brazed to the header 108 of the heat exchanger 100. Although, above description and forth coming description are with respect to the first plate 204, the same features are applicable to the second plate 206 having the first section 502 and the second sections 504. As explained above, the second sections 504 may be cavities or recessed portions. It is evident from the Figs. 8-10, that the cavities 504 may be formed on the inner face of the first plate 204, facing the header 108. Similarly, the cavities 504 may be formed on the inner face of the second plate 204, in which the inner face is a side of the plate facing the header 108.

As shown in Fig. 8, the second sections 504 are cavities formed at the corner areas, corresponding to the header 108, of the first plate 204 and the second plate 206. In one embodiment, the depth "D" of the cavity formed on the first plate 204 and the second plate 206 may be in the range of 0.5 to 0.9mm, preferably, 0,7 mm. In another example, the second sections 504 are recessed portions formed on an inner side of the first plate 204 and the second plate 206. Further, the corner areas of the first portion 502 of the first and the second plates 204, 206 are brazed to the header 108.

Further, the first portion 502 of the first and second plates 204, 206 may be brazed to the header 108, whereas the second portion 504 is not brazed to the header 108. As a result, the header 108 may be discontinuously brazed to the first and second plates 204, 206. As the second portions 504 of the first and second plates 204, 206 are not in contact with the header 108, the header 108 can move independently to an extent with respect to the first and second plates 204, 206, thereby avoiding crack/damage in the connection between the header 108 and the plates 204, 206. Also, such technique may increase thermal resistance without increasing weight/cost of the heat exchanger 100.

## Claims

1. A heat exchanger (100) for heat exchange between a first fluid and a second fluid, comprising: a stack of spaced apart heat exchange elements (106) forming a first fluid circuit for the first fluid; a header (108) adapted to receive first ends of the heat exchange elements (106); and a housing (202) adapted to at least partially encapsulate the heat exchange elements (106) to form a second fluid circuit (104) for the second fluid, the housing (202) further comprising: at least one first plate (204); a second plate (206) disposed parallelly with respect to the first plate (204), **characterized in that**, at least one of the plates (204, 206) comprises a first section (502) that is in contact with the header (108) and at least one second section (504) that is free from the contact with the header (108), so that the header (108) and the second section (504) are able to move independently with respect to each other during operational mode of the heat exchanger (100).

2. The heat exchanger (100) according to claim 1, further comprising a third plate (208) fixed perpendicularly with respect to the first plate (204) and the second plate (206) at a first side of the first plate (204) and the second plate (206), wherein the header (108) is fixed perpendicularly with respect to the first plate (204) and the second plate (206) at a second side of the first plate (204) and the second plate (206).

3. The heat exchanger (100) according to any of the preceding claims, further comprising at least one tank (110) fluidically connected to the header (108) and configured to provide fluidal communication for the second fluid circuit.

4. The heat exchanger (100) according to any of the preceding claims, wherein the first plate (204) comprises at least two second sections (504) formed on an inner face of the first plate (204), wherein the inner side of the first plate (204) is facing the header (108).

5. The heat exchanger (100) according to any of the preceding claims, wherein the second plate (206) comprises at least two second sections (504) formed on an inner face of the second plate (206), wherein the inner side of the second plate (206) is facing the header (108).

6. The heat exchanger (100) according to any of the claims 4 to 5, wherein a cavity is formed at the corner areas, corresponding to the header (108), of the first plate (204) and the second plate (206).

7. The heat exchanger (100) according to any of the claims 4 to 6, wherein the depth "D" of the cavity formed on at least one of the first plate (204) and the second plate (206) is 0.7 mm.

8. The heat exchanger (100) according to any of the claims 1 to 3, wherein the second section (504) formed on any one of the first plate (204) and the second plate (206) is a recessed portion.

9. The heat exchanger (100) according to claim 8, wherein the recessed portion is formed on an inner side of both the first plate (204) and the second plate (206), wherein the inner side of the first plate (204) and the second plate (206) is facing the header (108).

10. The heat exchanger (100) according to any of the preceding claims, further comprising: fins interlaced between the heat exchange elements (106) for increasing turbulence of the first fluid inside the housing (202); and turbulators formed within the heat exchange elements (106) for increasing turbulence of the second fluid within the heat exchange elements (106).

## Patentansprüche

1. Wärmetauscher (100) für einen Wärmeaustausch zwischen einem ersten Fluid und einem zweiten Fluid, umfassend: einen Stapel von beabstandeten Wärmeaustauschelementen (106), die einen ersten Fluidkreis für das erste Fluid bilden; einen Sammler (108), der dazu ausgelegt ist, erste Enden der Wärmeaustauschelemente (106) aufzunehmen; und ein Gehäuse (202), das dazu ausgelegt ist, die Wärmeaustauschelemente (106) zumindest teilweise einzukapseln, um einen zweiten Fluidkreis (104) für das zweite Fluid zu bilden, wobei das Gehäuse (202) ferner Folgendes umfasst: mindestens eine erste Platte (204); eine zweite Platte (206), die parallel zu der ersten Platte (204) angeordnet ist, **dadurch gekennzeichnet, dass** mindestens eine der Platten (204, 206) einen ersten Abschnitt (502), der in Kontakt mit dem Sammler (108) ist, und mindestens einen zweiten Abschnitt (504), der keinen Kontakt mit dem Sammler (108) aufweist, umfasst, so dass der Sammler (108) und der zweite Abschnitt (504) sich während eines Betriebsmodus des Wärmetauschers (100) voneinander unabhängig bewegen können.

2. Wärmetauscher (100) nach Anspruch 1, ferner umfassend eine dritte Platte (208), die senkrecht zu der ersten Platte (204) und der zweiten Platte (206) auf einer ersten Seite der ersten Platte (204) und der zweiten Platte (206) fixiert ist, wobei der Sammler (108) senkrecht zu der ersten Platte (204) und der zweiten Platte (206) auf einer zweiten Seite der ersten Platte (204) und der zweiten Platte (206) fixiert ist.

3. Wärmetauscher (100) nach einem der vorausgehenden Ansprüche, ferner umfassend mindestens einen Tank (110), der strömungstechnisch mit dem Sammler (108) verbunden und dazu ausgelegt ist, eine Fluidverbindung für den zweiten Fluidkreis bereitzustellen.

4. Wärmetauscher (100) nach einem der vorausgehenden Ansprüche, wobei die erste Platte (204) mindestens zwei zweite Abschnitte (504) umfasst, die auf einer Innenfläche der ersten Platte (204) gebildet sind, wobei die Innenseite der ersten Platte (204) dem Sammler (108) zugewandt ist.

5. Wärmetauscher (100) nach einem der vorausgehenden Ansprüche, wobei die zweite Platte (206) mindestens zwei zweite Abschnitte (504) umfasst, die auf einer Innenfläche der zweiten Platte (206) gebildet sind, wobei die Innenseite der zweiten Platte (206) dem Sammler (108) zugewandt ist.

6. Wärmetauscher (100) nach einem der Ansprüche 4 bis 5, wobei ein Hohlraum an den dem Sammler (108) entsprechenden Eckbereichen der ersten Platte (204) und der zweiten Platte (206) gebildet ist.

7. Wärmetauscher (100) nach einem der Ansprüche 4 bis 6, wobei die Tiefe "D" des auf mindestens einer der ersten Platte (204) und der zweiten Platte (206) gebildeten Hohlraums 0,7 mm beträgt.

8. Wärmetauscher (100) nach einem der Ansprüche 1 bis 3, wobei der auf einer beliebigen der ersten Platte (204) und der zweiten Platte (206) gebildete zweite Abschnitt (504) ein vertiefter Teil ist.

9. Wärmetauscher (100) nach Anspruch 8, wobei der vertiefte Teil auf einer Innenseite sowohl der ersten Platte (204) als auch der zweiten Platte (206) gebildet ist, wobei die Innenseite der ersten Platte (204) und der zweiten Platte (206) dem Sammler (108) zugewandt ist.

10. Wärmetauscher (100) nach einem der vorausgehenden Ansprüche, ferner umfassend: Rippen, die zwischen den Wärmeaustauschelementen (106) zum Erhöhen einer Verwirbelung des ersten Fluids in dem Gehäuse (202) verschachtelt sind; und Turbulatoren, die in den Wärmeaustauschelementen (106) zum Erhöhen einer Verwirbelung des zweiten Fluids in den Wärmeaustauschelementen (106) gebildet sind.

## Revendications

1. Échangeur de chaleur (100) pour échange de chaleur entre un premier fluide et un second fluide, comprenant: un empilement d'éléments d'échange de chaleur (106), espacés les uns des autres, formant un premier circuit de fluide pour le premier fluide ; un collecteur (108) adapté pour recevoir des premières extrémités des éléments d'échange de chaleur (106) ; et un boîtier (202) adapté pour au moins partiellement encapsuler les éléments d'échange de chaleur (106) pour former un second circuit de fluide (104) pour le second fluide, le boîtier (202) comprenant en outre : au moins une première plaque (204) ; une deuxième plaque (206) disposée parallèlement par rapport à la première plaque (204), **caractérisé en ce que**, au moins une des plaques (204, 206) comprend une première section (502) qui est en contact avec le collecteur (108) et au moins une seconde section (504) qui est dépourvue du contact avec le collecteur (108), pour que le collecteur (108) et la seconde section (504) puissent se déplacer indépendamment l'un par rapport à l'autre durant un mode de fonctionnement de l'échangeur de chaleur (100).

2. Échangeur de chaleur (100) selon la revendication 1, comprenant en outre une troisième plaque (208) fixée perpendiculairement par rapport à la première plaque (204) et la deuxième plaque (206) sur une premier côté de la première plaque (204) et de la deuxième plaque (206), dans lequel le collecteur (108) est fixé perpendiculairement par rapport à la première plaque (204) et la deuxième plaque (206) sur un second côté de la première plaque (204) et de la deuxième plaque (206).

3. Échangeur de chaleur (100) selon l'une quelconque des revendications précédentes, comprenant en outre au moins un réservoir (110) fluidiquement raccordé au collecteur (108) et configuré pour fournir une communication fluidique pour le second circuit de fluide.

4. Échangeur de chaleur (100) selon l'une quelconque des revendications précédentes, dans lequel la première plaque (204) comprend au moins deux secondes sections (504) formées sur une face intérieure de la première plaque (204), dans lequel le côté intérieur de la première plaque (204) fait face au collecteur (108).

5. Échangeur de chaleur (100) selon l'une quelconque des revendications précédentes, dans lequel la deuxième plaque (206) comprend au moins deux secondes sections (504) formées sur une face intérieure de la deuxième plaque (206), dans lequel le côté intérieur de la deuxième plaque (206) fait face au collecteur (108).

6. Échangeur de chaleur (100) selon l'une quelconque des revendications 4 et 5, dans lequel une cavité est formée dans les zones de coin, correspondant au collecteur (108), de la première plaque (204) et de la deuxième plaque (206).

7. Échangeur de chaleur (100) selon l'une quelconque des revendications 4 à 6, dans lequel la profondeur « D » de la cavité formée sur au moins une de la première plaque (204) et de la deuxième plaque (206) est de 0,7 mm.

8. Échangeur de chaleur (100) selon l'une quelconque des revendications 1 à 3, dans lequel la seconde section (504) formée sur l'une quelconque de la première plaque (204) et de la deuxième plaque (206) est une partie évidée.

9. Échangeur de chaleur (100) selon la revendication 8, dans lequel la partie évidée est formée sur un côté intérieur à la fois de la première plaque (204) et de la deuxième plaque (206), dans lequel le côté intérieur de la première plaque (204) et de la deuxième plaque (206) fait face au collecteur (108).

10. Échangeur de chaleur (100) selon l'une quelconque des revendications précédentes, comprenant en outre : des ailettes entrelacées entre les éléments d'échange de chaleur (106) pour augmenter la turbulence du premier fluide à l'intérieur du boîtier (202) ; et des turbulateurs formés à l'intérieur des éléments d'échange de chaleur (106) pour augmenter la turbulence du second fluide à l'intérieur des éléments d'échange de chaleur (106) .
